(19) Europäisches Patentamt
European Patent Office
Office européen des brevets

(11) EP 0 628 655 B1

(12) # EUROPÄISCHE PATENTSCHRIFT

(45) Veröffentlichungstag und Bekanntmachung des Hinweises auf die Patenterteilung:
**16.05.2001 Patentblatt 2001/20**

(51) Int Cl.[7]: **D06L 3/02**, C11D 3/39, C08B 37/08

(21) Anmeldenummer: **94810324.7**

(22) Anmeldetag: **02.06.1994**

(54) **Bleichhilfsmittel**

Bleaching aids

Adjuvants de blanchiment

(84) Benannte Vertragsstaaten:
**BE CH DE ES FR GB IT LI**

(30) Priorität: **11.06.1993 CH 174493**

(43) Veröffentlichungstag der Anmeldung:
**14.12.1994 Patentblatt 1994/50**

(73) Patentinhaber: **Ciba Specialty Chemicals Holding Inc.**
**4057 Basel (CH)**

(72) Erfinder:
- **Stehlin, Albert**
  **F-68300 Rosenau (FR)**
- **Huber, Klaus, Dr.**
  **D-79110 Freiburg (DE)**
- **Maier, Thomas, Dr.**
  **D-79418 Schliengen (DE)**

(56) Entgegenhaltungen:
**EP-A- 0 210 952**
**EP-A- 0 557 730**
**EP-A- 0 563 013**
**WO-A-90/04608**
**DE-C- 894 993**
**FR-A- 2 650 282**
**JP-B- 46 028 226**
**JP-B- 51 030 184**
**US-A- 2 927 082**

- **DATABASE WPI Derwent Publications Ltd., London, GB; AN 83-31146K & JP-A-58 029 801 (AGENCY OF IND SCI TECH) 22. Februar 1983**
- **PATENT ABSTRACTS OF JAPAN vol. 16, no. 413 (C-0980)2. September 1992 & JP-A-04 141 533 (TANAKA KIKINZOKU KOGYO KK) 15. Mai 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 628 655 B1

## Beschreibung

Die vorliegende Erfindung betrifft eine wässrige Zusammensetzung mit bleichregulierender Wirkung. Weitere Erfindungsgegenstände sind eine Bleichflotte enthaltend die erfindungsgemässe wässrige Zusammensetzung, ein Verfahren zum Bleichen von cellulosehaltigen Fasermaterialien sowie das nach diesem Verfahren behandelte Fasermaterial.

Die JP-A-510301845 offenbart eine Bleichmittelzusammensetzung, enthaltend ein Magnesiumion, ein wasserlösliches Kalium- oder Natriumsalz eines organischen Komplexiermittels vom Typ einer handelsüblichen Aminocarboxylsäure, wie z.B. Nitrilotriessigsäure (NTA), Ethylendiamintetraessigsäure (EDTA), Diethylentriaminpentaessigsäure (DTPA), oder Cyclohexandiamintetraessigsäure (CyDTA)und einer Aldolsäure. Die Zusammensetzung findet insbesondere Verwendung zum Bleichen von mit Schwerrmetallen verunreinigten Fasermaterialien.

Die erfindungsgemässe, wässrige Zusammensetzung ist dadurch gekennzeichnet, dass sie

(a) als bleichregulierende Komponente,

($a_1$) eine polymere Verbindung einer α-Monoamino-dicarbonsäure,
($a_2$) eine carboxymethylierte α-Aminosäure der Formel

(2) 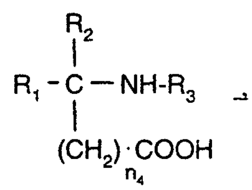

worin

$R_1$ Wasserstoff, $-CH_2COOH$ oder $-(CH_2)_2COOH$,
$R_2$ Wasserstoff oder $-CH_2COOH$,
$R_3$ $-CH_2COOH$ oder

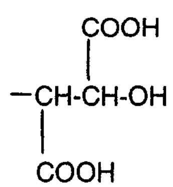

und
$n_4$ 0 oder 1 bedeuten; oder eine Asparaginsäure oder Glutaminsäure,

($a_3$) ein ionogenes oder anionisch modifiziertes Polysaccharid oder
($a_{41}$) einem Gemisch aus monomeren und oligomeren Verbindungen entsprechend

(5) 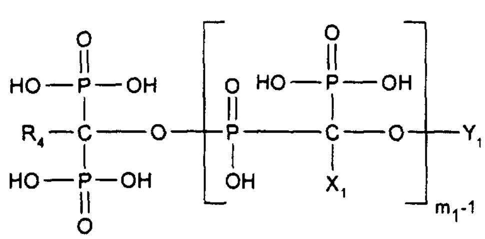 ,

worin $Y_1$ Wasserstoff oder $-COT_1$, $R_4$, $X_1$ und $T_1$ unabhängig voneinander jeweils $C_1$-$C_4$-Alkyl und $m_1$ 1 bis

17 bedeuten,
($a_{42}$) Aminophosphonsäuren, und
($a_{43}$) Zitronensäure,

(b) ein Magnesiumsalz einer organischen Carbonsäure und
(c) ein Konservierungsmittel enthält, **wobei eine der Komponenten ($a_1$) und ($a_2$) immer anwesend ist.**

Bei den als ($a_1$) definierten Vebindungen kommen in erster Linie polymere Verbindungen der L-Asparaginsäure in Betracht.

Ganz besondere Bedeutung kommt den Verbindungen der Komponente ($a_1$) zu, die einem Polypeptid der Asparaginsäure der Formel

(1)

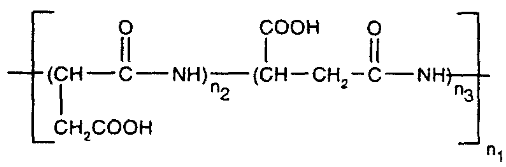

entsprechen, worin

$n_1$ 3-15,
$0 \leq n_2 \leq 2$,
$0 \leq n_3 \leq 2$ und die Summe von $n_2$ und $n_3$ gleich 2 ist,

bedeuten.

Weitere wichtige Bleichstabilisatoren stellen α-Monoamino-dicarbonsäuren bzw. Derivate entsprechend der Komponente ($a_2$) dar. Besonders interessant sind L-Asparaginsäure oder L-Glutaminsäure.

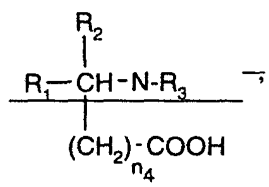

Ganz besonders interessante Verbindungen der Komponente ($a_2$) sind carboxymethylierte Derivate der Asparaginsäure oder Glutaminsäure, und insbesondere Verbindungen, die der Formel

(3)

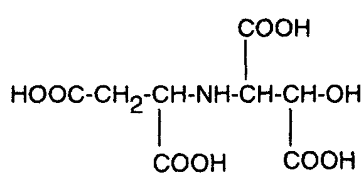

entsprechen.

Bei der Komponente ($a_3$) handelt es sich um hochmolekulare Verbindungen, die als Grundbausteine Glucose, Mannuronsäure, Guluronsäure, Mannose, Galactose, Xylose, Arabinose, Fucose, D-Galactose oder L-Rhamnose enthalten. Es kommen sowohl Homoals auch Heteropolysaccharide in Betracht, wobei sich die Homopolysaccharide aus einheitlichen Monosaccharideinheiten zusammensetzen, während die Heteropolysaccharide aus verschiedenen Grundbausteinen zusammengesetzt sein können. Beispiele für anionische Polysaccharide sind carboxymethylierter Guarether, Carboxymethylstärke, carboxymethyliertes Johannisbrotkernmehl, Xanthan, Natriumalginat und ganz besonders Natrium-Carboxymethylcellulose (Na-CMC) und k-Carrageenan. Die anionisch modifizierten Polysaccharide

können einzeln oder als Mischungen mit anionischen Tensiden, wie z.B. Na-Cholat eingesetzt werden. Das Mischungsverhältnis Polysaccharid : anionisches Tensid reicht dabei von 10:1 und 1:10, vorzugsweise von 5:1 und 1:5, und ganz besonders von 3:1 und 1:3.

Ganz besonders bevorzugte Komponenten ($a_3$) sind ein Gemisch aus Carboxymethylcellulose-Natrium-Salz und Na-Cholat im Verhältnis 1:1 oder ein Gemisch aus k-Carrageenan und Na-Cholat im Verhältnis 3:1.

Besonders bevorzugte Verbindungen entsprechen der Formel

(4a) 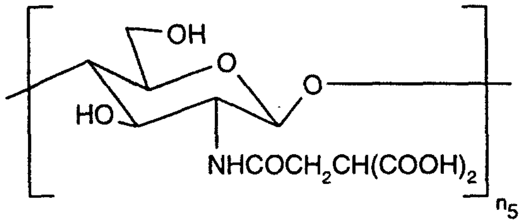

oder

(4b) 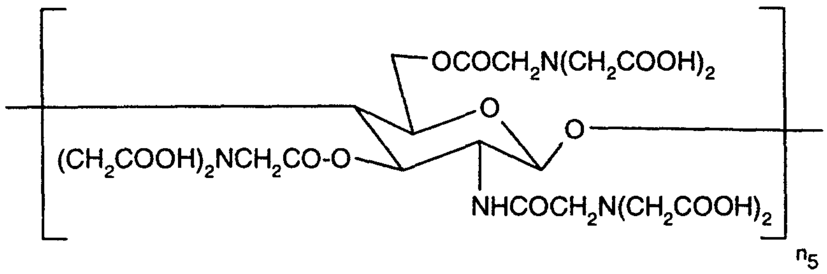 ,

worin $n_5$ 200 bis 13000 bedeutet.

Bei dem Gemisch aus monomeren und oligomeren Verbindungen ($a_{41}$) handelt es sich vorzugsweise um ein Gemisch aus monomeren und oligomeren Verbindungen der Formel

(6) 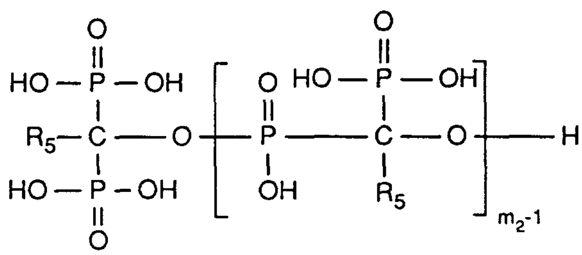 ,

worin

$R_5$ Methyl oder Ethyl und $m_2$ 1 bis 14 bedeuten.

Besondere Bedeutung kommt dabei einem Gemisch aus monomeren und oligomeren Verbindungen der Formel

(7) 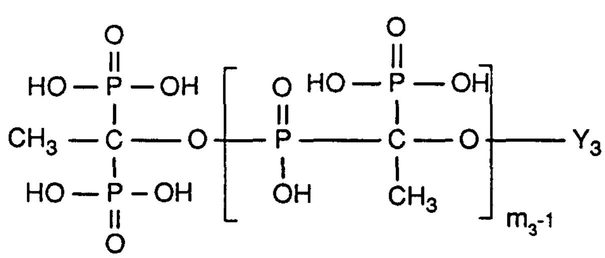

zu, worin $Y_3$ Wasserstoff oder Acetyl und $m_3$ 1 bis 4 bedeuten.

Die Gemische der monomeren und oligomeren Verbindungen der angegebenen Art sind an sich bekannt und werden nach bekannten Methoden hergestellt. So wird z.B. das Gemisch der Formel (7) vorzugsweise durch Umsetzung von Phosphortrichlorid, Essigsäure und gegebenenfalls Essigsäureanhydrid in wässrigem Medium hergestellt. Die oligomeren Anteile der Komponente ($a_{41}$) werden in der wässrigen, erfindungsgemässen Zusammensetzung in Gegenwart eines Alkalimetallhydroxids mindestens teilweise zu den entsprechenden monomeren Verbindungen hydrolisiert. Demgemäß kommen als Komponente ($a_{41}$) der erfindungsgemässe Zusammensetzungen vor allem auch monomere Verbindungen einer der Formeln (5) bis (7) in Frage.

Die Komponente ($a_{41}$) wird vorzugsweise als 35 bis 90, vorzugsweise 40 bis 85, insbesondere 40 bis 60 gewichtsprozentige, wässrige Lösung in der erfindungsgemässen Zusammensetzung eingesetzt.

Bevorzugte Aminophosphonsäuren, die der Komponente ($a_{42}$) entsprechen, sind Aminotrimethylenphosphonsäure, Ethylendiamintetramethylenphosphonsäure oder Diethylentriaminpentamethylenphosphonsäure.

Als weitere Alternative für das Gemisch aus monomeren und oligomeren Phosphonsäureestern ($a_{41}$) bzw. Aminophosphonsäuren ($a_{42}$) kommt als Komplexbildner entsprechend Komponente ($a_{43}$) Zitronensäure in Betracht.

Vorzugsweise enthalten die erfindungsgemässen Zusammensetzungen Gemische aus den Komponenten ($a_{41}$) und/oder Gemische aus ($a_{42}$) mit ($a_{43}$).

Die Komponenten ($a_1$) bis ($a_4$) wirken als Komplexbildner für Erdalkali- und Schwermetalle in wässrigen Flotten, die eine Perverbindung, z.B. Wasserstoffperoxid enthalten, bei der Vorbehandlung, insbesondere bei Bleichprozessen von cellulosehaltigen Fasermaterialien. Insbesondere wird durch diese Komponenten die Zersetzung der Perverbindung durch freie, d.h. nicht als Komplex vorliegende Schwermetalle, die im Betriebswasser oder im zugesetzten Alkali vorhanden sein können, unterdrückt.

Bei den Magnesiumsalzen von Carbonsäuren mit komplexierenden Eigenschaften handelt es sich um Salze von Gluconsäure, Zitronendäure, Äpfelsäure, Milchsäure, L-Glutaminsäure und L-Asparaginsäure.

Insbesondere werden als Komponente (b) die Magnesiumsalze der Gluconsäure verwendet und ganz besonders Magnesiummono- oder Magnesiumdigluconat. Das Magnesiumgluconat kann dabei in der erfindungsgemässen Zusammensetzung als solches und vorzugsweise als Feststoff eingesetzt werden. In einer weiteren Ausführungsform kann das Gluconat aber auch in situ gebildet werden aus Gluconsäure und Magnesiumhydroxid oder Magnesiumoxid, vorzugsweise Magnesiumhydroxid. Ferner kann Gluconsäure oder dessen Natriumsalz in Kombination mit einem wasserlöslichen Magnesiumsalz eingesetzt werden. Als wasserlösliches Magnesiumsalz kommt dabei das Acetat, vor allem das Sulfat oder dessen Heptahydrat und insbesondere das Chlorid oder dessen Hexahydrat in Betracht. Das Magnesiumsalz wird in der Regel als Feststoff eingesetzt, wobei festes Magnesiumchlorid-Hexahydrat im Vordergrund steht.

Als Konservierungsmittel entsprechend der Komponente (c) finden z.B. Verbindungen wie Chloracetamid, 1-2-Benzothiazolin-3-on, Sorbinsäure, Ascorbinsäure, Propionsäure, Benzoesäure, Chlorhexidingluconat, Chlorhexidinacetat, 4-Hydroxibenzoat, spezielle Butylester, auch Gemische von Methyl- und Propylester, Phenoxyetherat, 1,2-Benzisothiazolin-3-on oder 2-Phenyletherat oder insbesondere Essigsäure Verwendung.

Ganz besonders bevorzugte erfindungsgemässe wässrige Zusammensetzungen sind dadurch gekennzeichnet, dass sie

($a_1$) ein Polypeptid der Asparaginsäure der Formel

(1) 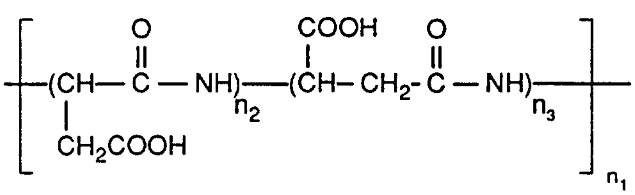 ,

worin

$n_1$ = 3-15
0 $n_2 \leq 2$,
$0 \leq n_3 \leq 2$ und die Summe von $n_2$ und $n_3$ gleich 2 ist,

($a_{41}$) ein Gemisch aus monomeren und oligomeren Verbindungen der Formel

(6) 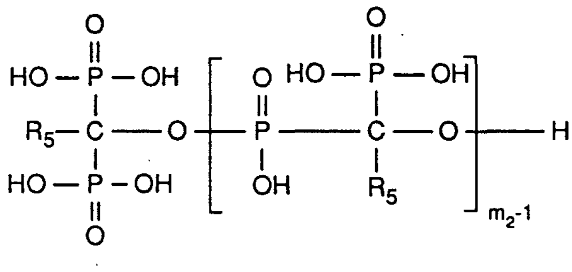

worin
$R_5$ Methyl oder Ethyl und $m_2$ 1 bis 14 bedeuten,
($b_1$) ein wasserlösliches Magnesiumsalz der Gluconsäure und
($c_1$) Essigsäure

enthalten.

Weitere wichtige erfindungsgemässe Zusammensetzungen sind dadurch gekennzeichnet, dass sie

($a_2$) eine carboxymethylierte a-Aminosäure der Formel

(2) 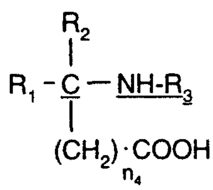 ,

worin

$R_1$ Wasserstoff, $-CH_2COOH$ oder $-(CH_2)_2COOH$,

$R_2$ Wasserstoff oder $-CH_2COOH$ und

$R_3$

$-CH_2COOH$ oder 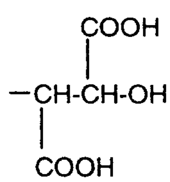

und

$n_4$ 0 oder 1 bedeuten,

(b) ein Gemisch aus Natriumgluconat und einem Magnesiumsalz,
(c) Essigsäure und
(d) ein Gemisch aus monomeren und oligomeren Verbindungen der Formel

(6) 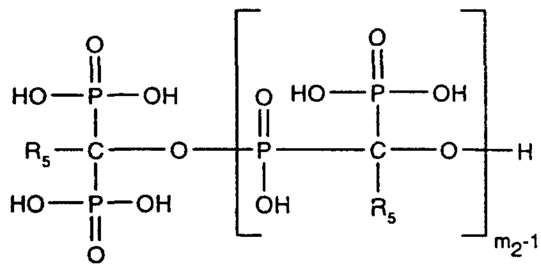

worin

$R_5$ Methyl oder Ethyl und $m_2$ 1 bis 14 bedeuten, enthalten.

Weiterhin kommen für die vorliegende Erfindungen wässrige Zusammensetzungen in Frage, die

($a_1$) ein Polypeptid der Asparaginsäure der Formel

(1) 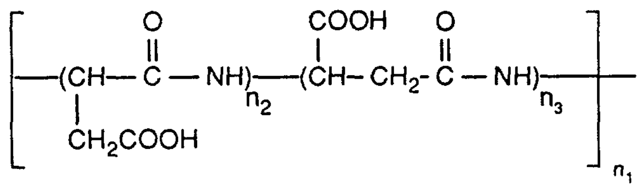 ,

worin

$n_1$ = 3-15,
$0 \leq n_2 \leq 2$,
$0 \leq n_3 \leq 2$ und die Summe von $n_2$ und $n_3$ gleich 2 ist,

($a_{43}$) Zitronensäure,
(b) ein wasserlösliches Magnesiumsalz der Gluconsäure und
(c) Essigsäure

enthalten.

Die erfindungsgemässen Zusammensetzungen enthalten im allgemeinen

| | |
|---|---|
| 1 bis 40 %, | vorzugsweise 1 bis 20 % der Komponente (a), |
| 1 bis 25 % | vorzugsweise 1 bis 15 % der Komponente (b), |
| 0,1 bis 5 %, | vorzugsweise 0,5 bis 2 % der Komponente (c) und |
| ad 100 % | Wasser, |

bezogen auf das Gesamtgewicht der Zusammensetzung.

Bei der Herstellung der erfindungsgemässen Zusammensetzung geht man im allgemeinen so vor, dass man zunächst deionisiertes Wasser vorlegt und unter Rühren nacheinander die Komponente (b), die Komponente (a) und die Komponente (c) zudosiert und anschliessend bis zur Homogenität weiterrührt.

Bei den Verbindungen der Formeln (4a) und (4b) der Komponente ($a_3$) handelt es sich um neue Verbindungen, die einen weiteren Erfindungsgegenstand der vorliegenden Erfindung darstellen. Die Herstellung erfolgt, ausgehend von Chitosan, nach folgendem Reaktionsschema:

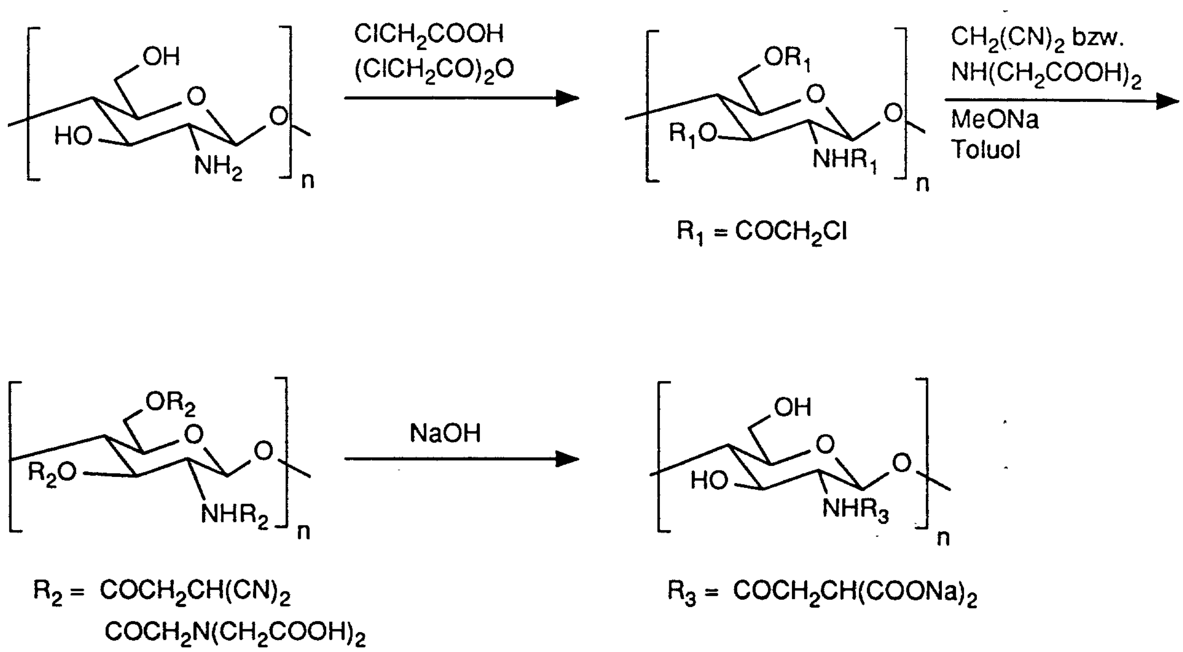


Einen weiteren Erfindungsgegenstand bildet das Applikationsverfahren zum Bleichen von Cellulose enthaltenden Fasermaterialien. Das Verfahren ist dadurch gekennzeichnet, dass man das Fasermaterial mit einer wässrigen Flotte behandelt, welche mindestens die erfindungsgemässe wässrige Zusammensetzung, ein Alkalimetallhydroxid und eine Perverbindung enthält.

Die wässrigen Bleichflotten zur Durchführung des entsprechenden Applikationsverfahrens, bei welchem die erfindungsgemässe Zusammensetzung verwendet wird, stellen einen weiteren Gegenstand der Erfindung dar. Sie enthalten als Perverbindung z.B. Alkalimetallperoxidisulfate oder vor allem Alkalimetallperoxisulfate, wobei das Kalium- und insbesondere das Natriumperoxidisulfat oder -peroxisulfat bevorzugt sind. Hierbei ist das Natriumperoxisulfat ($Na_2S_2O_8$) ganz besonders bevorzugt, das in der Regel als Feststoff eingesetzt wird. Als Perverbindung steht Wasserstoffperoxid im Vordergrund des Interesses, das auf Grund seiner höheren Stabilität in der Regel als konzentrierte, etwa 30 bis 60 gewichtsprozentige Lösung eingesetzt wird.

Als Alkalimetallhydroxide kommen vor allem Kalium- oder insbesondere Natriumhydroxid, vorzugsweise als konzentrierte, etwa 30 gewichtsprozentige Lösung oder als festes Ätzkali oder vor allem Ätznatron, in Betracht.

Die Bleichflotten enthalten neben der erfindungsgemässen Zusammensetzung, Alkalimetallhydroxid und einer Perverbindung als fakultativeKomponenten gegebenenfalls auch Netz- bzw. Waschmittel, Entschäumungs- bzw. Entlüftungsmittel und/oder optische Aufheller.

Netz- bzw. Waschmittel werden als fakultative Komponente der Bleichflotten in der Regel eingesetzt, sofern beim zu behandelnden cellulosehaltigen Fasermaterial die Cellulose in rohem Zustand vorliegt oder insbesondere aus roher Baumwolle besteht. Als Netz- bzw. Waschmittel kommen anionische oder nichtionogene Tenside, insbesondere aber deren Gemische, in Betracht. Bevorzugte anionische Tenside sind z.B. Alkarylmonosulfonate, Fettsäurekondensationsprodukte, Eiweissspaltprodukte oder deren Salze und vor allem Alkylmonosulfonate und Alkylbenzolmonosulfonsäuren mit 12 bis 22 Kohlenstoffatomen im Alkylrest. Bevorzugte nichtionogene Tenside sind z.B. Addukte aus Alkylenoxiden, vor allem Propylen- und insbesondere Ethylenoxid und Alkylphenolen mit z.B. 4 bis 12 Kohlenstoffatomen im Alkylrest, vor allem Fettsäureamiden und insbesondere gegebenenfalls endgruppenverschlossene Fettalkohole, wobei Addukte aus Ethylenoxid und Fettalkoholen besonders bevorzugt sind und als Gemisch mit den Alkylmonosulfonaten der angegebenen Art im Vordergrund des Interesses stehen. Als weitere Komponenten in diesen Gemischen eignen sich auch Silikontenside.

Entschäumungs- bzw. Entlüftungsmittel sind als fakultative Komponente der Bleichflotte vor allem bei Vorhandensein eines Netz- bzw. Waschmittels in der Bleichflotte erforderlich. Hierbei handelt es sich z.B. um höhere Alkohole, insbesondere Isooctanol, jedoch vor allem um Entschäumungs- und/oder Entlüftungsmittel auf Siliconbasis, insbesondere um Siliconölemulsionen.

Die ebenfalls als fakultative Komponente der Bleichflotten eingesetzten optischen Aufheller zur Erzielung eines besonders hohen Weissgrades der behandelten Materialien gehören im allgemeinen der Styryl- und Stilbenreihe an, wie z.B. Distyrylarylene, Diaminostilbene, Ditriazolylstilbene, Phenylbenzoxyzolylstilbene, Stilbennaphthotriazole und Dibenzoxazolylstilbene. Bevorzugt sind optische Aufheller vom Typ der Distyrylbiphenyle oder der Bistriazinylaminostilbene, welche Sulfonsäuregruppen enthalten, z.B. sulfonierte Bisstyrylbiphenyl- und Bistriazinyl-Derivate, insbesondere die als Alkalimetallsalze, vor allem als Kalium- oder vorzugsweise als Natriumsalze vorliegenden Bis(Phenylamino-morpholino-s-triazinyl)-stilben-disulfonsäuren. Diese werden vorzugsweise als handelsübliche, wässrige, etwa 20 bis 30 gewichtsprozentige Flüssigformulierungen gegebenenfalls eingesetzt.

Das Applikationsverfahren zum Bleichen von Cellulose enthaltenden Fasermaterialien unter Verwendung der erfindungsgemässen Zusammensetzung wird nach an sich bekannten Methoden durchgeführt. Man unterscheidet hierbei zwischen einer Behandlung in langen Flotten, einem Kaltlager- und einem Unterflottenbleichverfahren.

In langen Flotten wird das Material einer Behandlung bei einem Flottenverhältnis von etwa 1:3, z.B. in einem Jigger, bis etwa 1:40, z.B. in einer Haspelkufe während etwa 1 bis 3 Stunden bei erhöhter Temperatur unterworfen, wobei die Behandlungstemperatur etwa 40 bis 140°C beträgt, vorzugsweise 60 bis 100°C unter Normalbedingungen, d.h. unter atmosphärischem Druck oder über 100°C, vorzugsweise 105 bis 140°C unter sogenannten HT-Bedingungen (HT = Hochtemperatur).

Das Unterflottenbleichverfahren erfolgt unter den gleichen Applikationsbedingungen, mit dem Unterschied, dass die Konzentration an zugesetzter Perverbindung höher ist.

Bei dem Kaltlagerbleichverfahren wird das zu behandelnde Material durch Eintauchen in eine Klotzflotte und anschliessendem Abquetschen imprägniert, wobei die Klotzflotte in der Regel eine Temperatur von 20 bis 95°C aufweist. Vorzugsweise erfolgt die Imprägnierung bei Raumtemperatur. Die durch die Imprägnierung aufgebrachten Chemikalien wirken sodann auf das Textilmaterial ein, wobei Einwirkungszeit, gegebenenfalls erhöhte Temperatur und Chemikalien-Konzentration in direktem Zusammenhang stehen und die gewählten Bedingungen von der Beschaffenheit des Fasermaterials und vor allem der zur Verfügung stehenden Anlage abhängen. Anschliessend wird die imprägnierte und vorzugsweise aufgerollte Ware bei Raumtemperatur (15 bis 30°C), z.B. während 3 bis 24 Stunden gelagert, wobei die Kaltverweilzeit von der Art des applizierten Bleichbades abhängig ist. Anschliessend werden die Fasermaterialien in der Regel zuerst mit heissem Wasser von etwa 90 bis 98°C und dann mit warmem und zuletzt mit kaltem Wasser gründlich gespült, gegebenenfalls mit z.B. Essigsäure neutralisiert und hierauf vorzugsweise bei höheren Temperaturen bis z.B. 150°C entwässert und getrocknet.

Die wässrigen Bleichflotten haben, je nachdem, ob es sich um eine Langflotten-, Unterflotten- oder Kaltflottenbleiche handelt, die angegebenen Zusammensetzungen.

Die Langflottenbleichen enthalten

0,5 bis 5, vorzugsweise 0,5 bis 2 g/kg der wässrigen, erfindungsgemässen Zusammensetzung,
1 bis 6, vorzugsweise 2 bis 5 ml/kg einer Perverbindung,
1 bis 5, vorzugsweise 0,1 bis 2 g/kg eines Alkalimetallhydroxids,
0 bis 2, vorzugsweise 0,5 bis 1 g/kg eines Netz- bzw. Waschmittels,
0 bis 0,5 oder 0,05 bis 0,5 g/kg eines Entschäumungs- bzw. Entlüftungsmittels, und
0 bis 5, vorzugsweise 1,5 bis 4 g/kg eines optischen Aufhellers.

Die Unterflottenbleichen enthalten

0,5 bis 5, vorzugsweise 0,5 bis 2 g/kg der wässrigen, erfindungsgemässen Zusammensetzung,
2 bis 12, vorzugsweise 4 bis 10 ml/kg einer Perverbindung,
1 bis 5, vorzugsweise 1,5 bis 4 g/kg eines Alkalimetallhydroxids,
0 bis 2, vorzugsweise 0,5 bis 1 g/kg eines Netz- bzw. Waschmittels,
0 bis 0,5 oder 0,05 bis 0,5 g/kg eines Entschäumungs- bzw. Entlüftungsmittels, und
0 bis 30, vorzugsweise 2 bis 10 g/kg eines optischen Aufhellers.

Die Kaltlagerbleichen enthalten

5 bis 15, vorzugsweise 8 bis 12 g/kg der wässrigen, erfindungsgemässen Zusammensetzung,
30 bis 60, vorzugsweise 50 bis 60 ml/kg einer Perverbindung,
20 bis 50, vorzugsweise 25 bis 40 g/kg eines Alkalimetallhydroxids,
1 bis 6, vorzugsweise 3 bis 6 g/kg eines Netz- bzw. Waschmittels,
0 bis 2, vorzugsweise 0,05 bis 1 g/kg eines Entschäumungs- bzw. Entlüftungsmittels, und
0 bis 6, vorzugsweise 2 bis 6 g/kg eines optischen Aufhellers.

Das zu behandelnde cellulosehaltige Fasermaterial kann in verschiedenen Verarbeitungsformen vorliegen, z.B. als loses Material, Garn, Gewebe oder Gewirke. Hierbei handelt es sich in der Regel stets um textile Fasermaterialien, die aus reinen textilen Cellulosefasern oder aus Gemischen von textilen Cellulosefasern mit textilen Synthesefasern hergestellt werden.

Als cellulosehaltige Fasern kommen z.B. solche aus regenerierter Cellulose, wie z.B. Zellwolle oder Viskose, solche aus nativer Cellulose, wie z.B. Hanf, Leinen, Jute, Ramie und vor allem Baumwolle und als synthetische Fasern solche aus Polyacrylnitril und vor allem aus Polyester und Polyamid in Betracht.

Gewebe aus Baumwolle oder regenerierter Cellulose oder Mischgewebe aus Baumwolle und Polyester und aus Baumwolle und Polyamid eignen sich besonders gut dazu, erfindungsgemäss behandelt zu werden, wobei Baumwollgewebe und -gewirke im Vordergrund des Interesses stehen. Mit z.B. Tensiden vorgewaschene Materialien kommen auch in Betracht. Es ist auch möglich, geschlichtete Baumwollfasern zu bleichen, wobei das Bleichen vor oder vorzugsweise nach dem Entschlichten erfolgt.

Die unter Verwendung der erfindungsgemässen Zusammensetzung behandelten Fasermaterialien zeichnen sich durch ihre Schalenfreiheit, ihren niedrigen Aschengehalt und vor allem ihren hohen Weissgrad aus. Die Cellulose, bzw. der Celluloseanteil des gebleichten Materials weist zudem keine Schädigungen bzw. keinen wesentlichen Abbau des Cellulosepolymerisationsgrades (= DP-Grad, DP = Durchschnittspolymerisation) auf. Mit der erfindungsgemässen Zusammensetzung wird eine besonders hohe Stabilisierungswirkung, insbesondere in Bleichflotten, die einen pH-Wert > 11 aufweisen, erzielt. Schwermetallspuren, insbesondere Eisen(III)-Ionen, die eine spontane Zersetzung der in der Bleichflotte vorhandenen Perverbindungen bewirken können, werden wirkungsvoll gebunden bzw. inaktiviert. Eine Folge davon ist, dass der ursprünglich vorhandene Aktivsauerstoffgehalt der Bleichflotten über längere Zeit (z.B. bis zu 5 Tagen) erhalten bleibt oder nur unwesentlich, höchstens um 10 % abnimmt. Trotzdem wird ein ausgezeichneter Bleicheffekt erzielt. Die Flotten sind somit im Hinblick auf ihren Aktivsauerstoffgehalt stabil und können über längere Zeit verwendet werden. Außerdem wird mit der erfindungsgemässen Zusammensetzung eine kristallisationshemmende Wirkung gegenüber Wasserhärte erzielt. Die Wiederbenetzbarkeit eines mit der erfindungsgemässen Zusammensetzung behandelten Fasermaterials ist ausgezeichnet. Ein wesentlicher Vorteil der erfindungsgemässen Zusammensetzung ist ihre gute biologische Abbaubarkeit.

In den folgenden Beispielen beziehen sich Prozent und Teile stets auf das Gewicht.

Herstellungsbeispiele der neuen Verbindungen:

Beispiel 1:

a) Herstellung der Verbindung der Formel (101a)

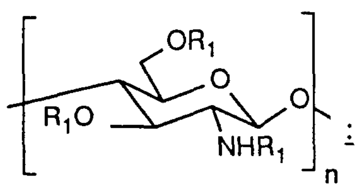

$R_1 = COCH_2Cl$

In einem 50-Liter-Emaillekessel werden 13,5 kg Chloressigsäure vorgelegt und bei 80°C geschmolzen. Man trägt portionsweise 1,25 kg (7,754 mol) Chitosan ein. Es entsteht eine beige, breiige Masse, zu der nun 4,8 kg (28,07 mol) Chloressigsäureanhydrid gegeben wird. Der Ansatz wird dunkler und die Viskosität nimmt ab. Die Reaktionstemperatur wird über Nacht konstant gehalten. Am nächsten Morgen liegt eine dunkelbraune Lösung vor. Man zieht eine Probe und versetzt mit gleichem Volumen Wasser. Der braune Niederschlag wird abgesaugt und getrocknet. Die IR-Analyse entspricht der Referenzsubstanz.

In einem zweiten Kessel werden 20 Liter Wasser vorgelegt und die Reaktionslösung aus dem ersten Kessel zugepumpt. Die entstandene braune Suspension wird auf 20°C gekühlt, auf eine Filternutsche gepumpt und abgesaugt. Der hellbraune Niederschlag wird mit ca. 60 Liter Wasser neutral gewaschen und bei 60-70°C im Vakuum getrocknet.

Ausbeute: 2,58 kg (= 85,3% d.Th.) der Verbindung der Formel (101a).

b. Herstellung der Verbindung der Formel (101b)

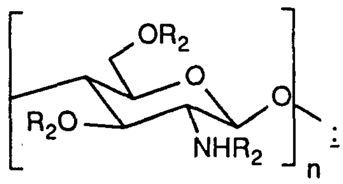

$R_2 = COCH_2CH(CN)_2$

Im 50-Liter-Emaillekessel werden 20 Liter Toluol vorgelegt und 1,7 kg (4,34 mol) der Verbindung der Formel (lOla) eingetragen. Man flutet den Kessel mit Stickstoff und kühlt auf 10°C. Im 10-Liter Planschliffkolben werden 5 liter Toluol vorgelegtund 861 g Malonsäuredinitril (13,03 mol) darin gelöst. Man spült mit Stickstoff. Die braune Lösung wird mit einem Eisbad auf 10°C gekühlt und portionsweise mit 2,347 kg (13,03 mol) 30%iger Natriummethylat-Lösung versetzt, so dass die Temperatur von 15°C nicht überschritten wird. Es entsteht eine beige Suspension, die 30 Minuten ausgerührt wird.

Am nächsten Tag wird eine Probe der Suspension gezogen, abgesaugt, der Niederschlag getrocknet und IR-analytisch untersucht, Das Spektrum entspricht der Referenzsubstanz.

Der Ansatz wird auf eine geerdete Filternutsche gepumpt und mit 10 Liter Toluol gewaschen. Den braunen Niederschlag trocknet man bei 60°C im Vakuum.

Ausbeute: 2,9 kg der Verbindung der Formel (101b)(= 139,4% d.Th.)

(Anmerkung: die Ausbeute ist zu hoch, da das Produkt noch KCl enthält. Die exakte Ausbeute lässt sich durch elementaranalytische Bestimmung des Chlor-Gehalts ermitteln.)

c. Herstellung der Verbindung der Formel (101c)

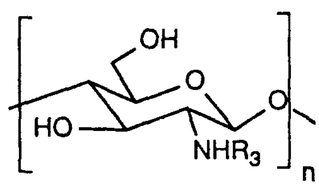

$R_3 = COCH_2CH(COONa)_2$

durch

Hydrolyse:

Im 50-Liter Emaillekessel wird eine Lösung aus 15 Liter Wasser und 1,042 kg NaOH-Pastillen vorgelegt und 2,9 kg der Verbindung der Formel (101b) eingetragen. Die braune Suspension wird für 5 Stunden auf 105°C unter Rückfluss erhitzt. Der entstandene Ammoniak wird mit Stickstoff ausgeblasen. Das IR-Spektrum zeigt noch eine deutliche CN-Bande, so dass nochmals 348 g NaOH zugegeben und für weitere 3 Stunden erhitzt wird. Es wird so lange unter Rückfluss erhitzt, bis keine CN-Bande vorhanden ist (insgesamt 12 Stunden). Anschliessend wird die braune Lösung neutralisiert und zwecks Vollentsalzung und Aufkonzentration einer Umkehrosmose unterzogen. Das erhaltene Konzentrat wird lyophilisiert.

Ausbeute: 746,2 g (= 49,2% d.Th.) der Verbindung der Formel 101c).

Herstellungsbeispiele der erfindungsgemässen Formulierungen

Beispiel 2: Es werden

| | |
|---|---|
| 770 g | deionisiertes Wasser vorgelegt und unter Rühren |
| 60 g | Magnesiumgluconat eingestreut. |

Es werden dann nacheinander

15 g der Verbindung der Formel

(102)

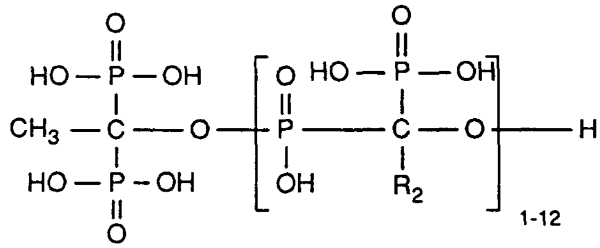

150 g einer 40%igen wässrigen Lösung der Verbindung der Formel

(103)

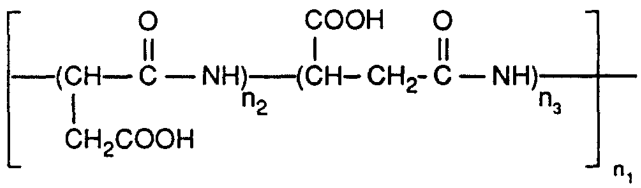

(Molekulargewicht 3000) $0 \leq n_2 \leq 4$, $0 \leq n_3 \leq 4$ und die Summe von $n_2/2$ und $n_3/2$ gleich 2 ist, und
5 g Essigsäure

zudosiert und bis zur Homogenität gerührt.

Man erhält eine klare Formulierung.

Beispiel 3: Man verfährt wie in Beispiel 2 beschrieben, mit dem Unterschied, dass man anstelle von 15 g der Verbindung der Formel (102)

20 g Zitronensäure·1 aq zusetzt und mit
100 g Wasser ergänzt.

Man erhält eine klare Formulierung.

Beispiel 4: In diesem Beispiel wird das in den Beispielen 2 und 3 eingesetzte Magnesiumdigluconat in situ aus Gluconsäure und Magnesiumhydroxid hergestellt.

In

70,85 g Wasser werden
11,3 g 50%ige Gluconsäure gelöst und dann
0,84 g Magnesiumhydroxid

eingerührt.

Wenn sich der pH-Wert auf ca. 6,5 stabilisiert hat, werden

1,5 g der Verbindung der Formel (102)
15 g einer 40%igen wässrigen Lösung der Verbindung der Formel (103) und
0,5 g Essigsäure

zugegeben. Das Magnesium liegt hier wie in Beispiel 1 theoretisch als Digluconat-Salz vor.

Man erhält eine klare Formulierung.

Beispiel 5: In

76,51 g Wasser werden
5,65 g 50%ige Gluconsäure gelöst und dann
0,84 g Magnesiumhydroxid eingerührt.

Wenn sich der pH-Wert stabilisiert hat, werden

1,5 g der Verbindung der Formel (102),
15 g einer 40%igen wässrigen Lösung der Verbindung der Formel (103) und
0,5 g Essigsäure

zugegeben.
Das Magnesium liegt hier, im Gegensatz zu den Beispielen 2 und 3 als Monogluconat-Salz vor.
Man erhält eine klare Formulierung.

Beispiel 6 (Vergleichsbeispiel): In

0,84 g Magnesiumhydroxid lässt man mit
12,4 g 50%iger Gluconsäure reagieren und verdünnt dann mit
39,41 g Wasser.

Dann rührt man nacheinander

30,0 g Zitronensäure.1aq
7,2 g NaOH,
10,0 g der Verbindung der Formel (102) und
0,15 g eines Konservierungsmittels auf Basis von 1,2-Benzisothiazolin-3-on

dazu.
Es entsteht eine bräunliche, klare Lösung.

Beispiel 7:

0,84 g Magnesiumhydroxid lässt man mit
12,4 g 50%iger Gluconsäure und
8,0 g einer oligomern Polymaleinsäure reagieren, bis eine klare Lösung entsteht.Dann verdünnt man mit
68,61 g deionisiertem Wasser.

Dann rührt man

10,0 g der Verbindung der Formel (102) und
0,15 g eines Konservierungsmittels auf Basis von 1,2-Benzisothiazolin-3-on

hinzu.
Es entsteht eine bräunliche, klare Lösung.

Beispiel 8:

Man legt

12,4 g 50%iger Gluconsäure und lässt mit
0,84 g Magnesiumhydroxid

während 4 Stunden und 60°C reagieren. Dann gibt man nacheinander

10,0 g eines Polymers auf Zuckerbasis, z.B. ®Solopol ZB
76,61 g deionisiertes Wasser und
0,15 g eines Konservierungsmittels auf Basis von 1,2-Benzisothiazolin-3-on

hinzu.
Es entsteht eine bräunliche, klare Lösung.

Beispiel 9 (Vergleichsbeispiel):

Man legt

17 g 50%iger Gluconsäure und lässt mit
9g $MgCl_2 \cdot 6H_2O$ reagieren, bis eine klare Lösung entsteht. Dann verdünnt man

mit

31,25 g deionisiertem Wasser. Dann gibt man nacheinander
10,0 g der Verbindung der Formel (102),
20 g Zitronensäure·laq,
12,6 g NaOH (30%ig) und
0,15 g eines Konservierungsmittels auf Basis von 1,2-Benzisothiazolin-3-on

hinzu.
Es entsteht eine bräunliche, klare Lösung.

Beispiel 10:

Es werden

83,85 g deionisiertes Wasser vorgelegt und unter Rühren
6g Magnesiumgluconat eingestreut.

Es werden dann nacheinander

10g der Verbindung der Formel (103) und
0,15 g eines Konservierungsmittels auf Basis von 1,2-Benzisothiazolin-3-on

zudosiert und bis zur Homogenität gerührt.
Man erhält eine klare Formulierung.

Applikationsbeispiele:

Beispiel 11: Ein rohes Baumwolltrikot wird während 45 Minuten bei 98°C in einem Bleichbad behandelt, welches im Liter

0,5 g der Zusammensetzung gemäss Beispiel 2,
1 g eines schaumarmen Netzmittels, z.B. ®Ultravon EL
1 g NaOH (100%ig) und
4 ml $H_2O_2$

enthält. Das Flottenverhältnis beträgt 1:20.
Der Weissgrad des Baumwolltrikots wird durch die Bleiche von -68 auf 36 Ciba-Weissgradeinheiten angehoben. Die prozentuale Abnahme des Peroxids während der Bleiche beträgt dabei nur 5 % der ursprünglichen Konzentration.

Wird anstelle der Zusammensetzung gemäss Beispiel 2 0,5 g/l einer Zusammensetzung gemäss Beispiel 3 eingesetzt, so wird der Weissgrad auf 33 Ciba-Weissgradeinheiten angehoben. Der Peroxid-Gehalt nimmt während der Bleiche um 20% ab.

Beispiel 12: Ein rohes Baumwolltrikot wird während 45 Minuten bei 98°C in drei Bleichbädern ($B_1$, $B_2$, $B_3$) behandelt, welche im Liter enthalten:

$B_1$: 0, 5 g der in Beispiel 6 hergestellten Formulierung
$B_2$: 0, 5 g der in Beispiel 7 hergestellten Formulierung
$B_3$: 0, 5 g der in Beispiel 8 hergestellten Formulierung

Die Bleichbäder $B_1$, $B_2$ und $B_3$ enthalten darüber hinaus jeweils

| | |
|---|---|
| 1 g | eines schaumarmen Netzmittels, z.B. ®Ultravon EL, |
| 2,5 g | NaOH (100%ig) und |
| 4ml | $H_2O_2$ (35%ig). |

Das Flottenverhältnis beträgt 1:10.

In der nachfolgenden Tabelle (Tabellle 1) sind die ermittelten Weissgrade angegeben:

Tabelle 11:

| Bleichbäder | $B_1$ | $B_2$ | $B_3$ |
|---|---|---|---|
| Weissgrad (R 46 ohne Filter) | 82,8 | 82,7 | 82,5 |
| DP-Wert (roh = 2600) | 2690 | 2360 | 2500 |
| DP = Durchschnittspolymerisation | | | |

Aus den Ergebnissen ist ersichtlich, dass alle Bleichbäder zu hohen Weissgraden ohne Schädigung der Faser führen.

Beispiel 13: 2 Roh-Baumwollqualitäten werden nach Seng-, Entschlichtungs-, Abkoch- und Mercerisierprozessen in einem Kaltlagerbleichbad mit folgender Zusammensetzung gebleicht:

| | |
|---|---|
| 0,15 g/l | Magnesiumsulfat |
| 3 g/l | der in Beispiel 9 hergestellten Fomulierung |
| 10 g/l | NaOH 100% |
| 7 ml/l | Wasserglas 30°Bé |
| 40 ml/l | $H_2O_2$ 35% |

und

1 g/l eines schaumarmen Netzmittels, z.B. ® Ultravon EL

Nach dem Imprägnieren (Flottenaufnahme ca. 100%) und einer Verweilzeit von 24 Stunden werden sehr gute Effekte bezüglich Weissgrad, Hydrophilität und Schalenentfernung erzielt.

**Patentansprüche**

1. Wässrige Zusammensetzung enthaltend

   (a) als bleichregulierende Komponente,

($a_1$) eine polymere Verbindung einer α-Monoamino-dicarbonsäure,
($a_2$) eine carboxymethylierte α-Aminosäure der Formel

(2) 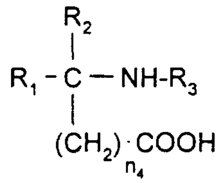 ,

worin

$R_1$ Wasserstoff, $-CH_2COOH$ oder $-(CH_2)_2COOH$,
$R_2$ Wasserstoff oder $-CH_2COOH$,
$R_3$ $-CH_2COOH$ oder

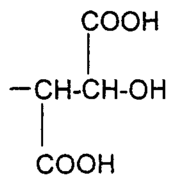

und
$n_4$ 0 oder 1 bedeuten; oder eineAsparaginsäure oder Glutaminsäure,

($a_3$) ein ionogenes oder anionisch modifiziertes Polysaccharid oder
($a_4$) einen Komplexbildner, ausgewählt aus

($a_{41}$) einem Gemisch aus monomeren und oligomeren Verbindungen entsprechend

(5) 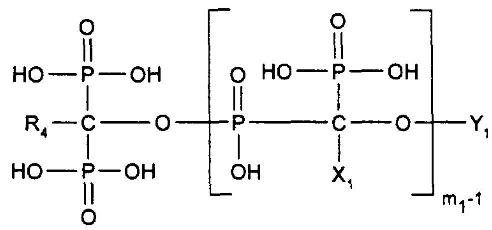 ,

worin $Y_1$ Wasserstoff oder $-COT_1$, $R_4$, $X_1$ und $T_1$ unabhängig voneinander jeweils $C_1$-$C_4$-Alkyl und $m_1$ 1 bis 17 bedeuten,
($a_{42}$) Aminophosphonsäuren, und
($a_{43}$) Zitronensäure,

(b) ein Magnesiumsalz einer organischen Carbonsäure und
(c) ein Konservierungsmittel, **wobei eine der Komponenten ($a_1$) und ($a_2$) immer anwesend ist.**

2. Zusammensetzung nach Anspruch 1, dadurch gekennzeichnet, dass die Komponente ($a_1$) eine polymere Verbindung der L-Asparaginsäure oder L-Glutaminsäure ist.

3. Zusammensetzung nach Anspruch 1 oder 2, dadurch gekennzeichnet, dass die Komponente ($a_1$) einem Polypeptid der Asparaginsäure der Formel

(1) 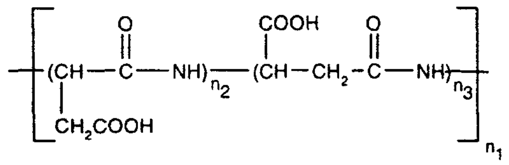

entspricht, worin

$n_1$ 3-15,
$0 \leq n_2 \leq 2$,
$0 \leq n_3 \leq 2$ und die Summe von $n_2$ und $n_3$ gleich 2 ist,

bedeuten.

4. Zusammensetzung nach Anspruch 1, dadurch gekennzeichnet, dass die Komponente ($a_2$) ein carboxymethyliertes Derivat der L-Asparaginsäure oder L-Glutaminsäure ist.

5. Zusammensetzung nach Anspruch 4, dadurch gekennzeichnet, dass die Komponente ($a_2$) N-(1,2-Dicarboxy-2-hydroxyethyl)-asparaginsäure entsprechend der Formel

(3) 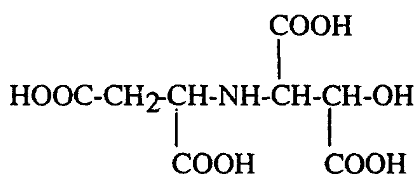

ist.

6. Zusammensetzung nach Anspruch 1, dadurch gekennzeichnet, dass als Komponente ($a_3$) ein ionogenes Polysaccharid der Formel

(4a) 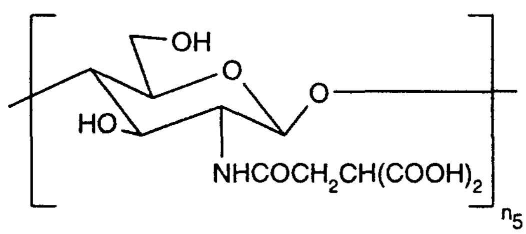

verwendet wird, worin
$n_5$ 200 bis 13000 bedeutet.

7. Zusammensetzung nach Anspruch 1, dadurch gekennzeichnet, dass als ionogenes Polysaccharid eine Verbindung der Formel

(4b) 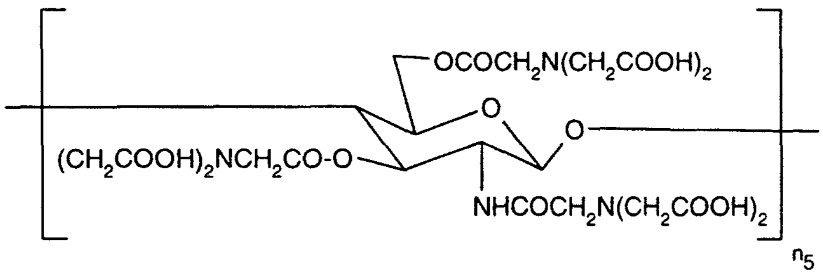

verwendet wird, worin $n_5$ 200-13000 bedeutet.

**8.** Zusammensetzung nach Anspruch 1, dadurch gekennzeichnet, dass die Komponente ($a_{41}$) einem Gemisch aus monomeren und oligomeren Verbindungen der Formel

(6) 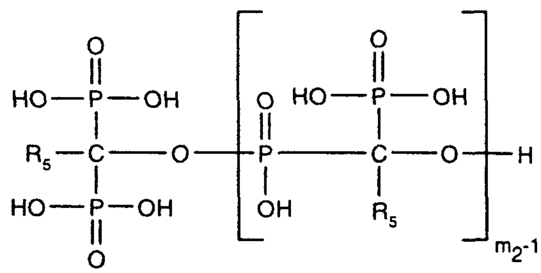

entspricht, worin
$R_5$ Methyl oder Ethyl und $m_2$ 1 bis 14 bedeuten.

**9.** Zusammensetzung nach Anspruch 1, dadurch gekennzeichnet, dass die Komponente ($a_{41}$) ein Gemisch aus monomeren und oligomeren Verbindungen der Formel

(7) 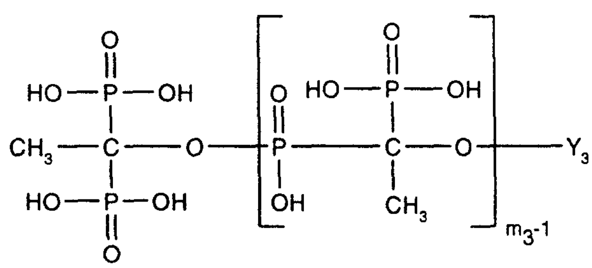

ist, worin $Y_3$ Wasserstoff oder Acetyl und $m_3$ 1 bis 4 bedeuten.

**10.** Zusammensetzung nach Anspruch 1, dadurch gekennzeichnet, dass als Komponente ($a_{42}$) Aminotrimethylenphosphonsäure, Ethylendiamintetramethylenphosphonsäure oder Diethylentriaminpentamethylenphosphonsäure verwendet wird.

**11.** Zusammensetzung nach Anspruch 1, dadurch gekennzeichnet dass sie Gemische aus den Komponenten ($a_{41}$) und/oder Gemische aus ($a_{42}$) mit ($a_{43}$) enthält.

**12.** Zusammensetzung nach Anspruch 1, dadurch gekennzeichnet, dass als Komponente (b) ein wasserlösliches Magnesiumsalz der Gluconsäure verwendet wird.

**13.** Zusammensetzung nach Anspruch 12, dadurch gekennzeichnet, dass in der Komponente (b) als wasserlösliches Magnesiumsalz Magnesiumsulfat oder Magnesiumchlorid verwendet wird.

**14.** Zusammensetzung nach Anspruch 1, dadurch gekennzeichnet, dass sie als Komponente

($a_1$) ein Polypeptid der Asparaginsäure der Formel

(1) 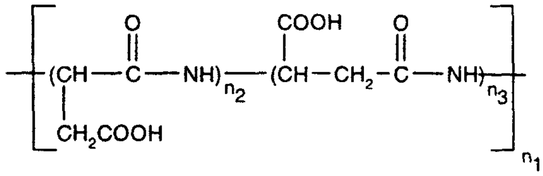 ,

worin

$n_1$ = 3-15
$0 \leq n_2 \leq 2$,
$0 \leq n_3 \leq 2$ und die Summe von $n_2$ und $n_3$ gleich 2 ist,

($a_{41}$) ein Gemisch aus monomeren und oligomeren Verbindungen der Formel

(6) 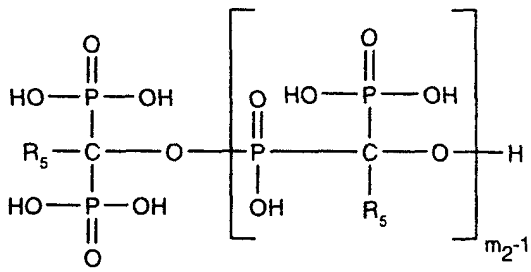

worin
$R_5$ Methyl oder Ethyl und $m_2$ 1 bis 14 bedeuten,
($b_1$) ein wasserlösliches Magnesiumsalz der Gluconsäure und
($c_1$) Essigsäure

enthält.

**15.** Zusammensetzung nach Anspruch 1, dadurch gekennzeichnet, dass sie

($a_2$) eine carboxymethylierte a-Aminosäure der Formel

(2) 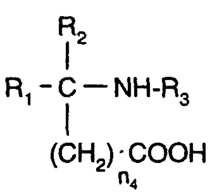 ,

worin

$R_1$ Wasserstoff, $-CH_2COOH$ oder $-(CH_2)_2COOH$,

$R_2$ Wasserstoff oder $-CH_2COOH$ und

$R_3$ $-CH_2COOH$ oder

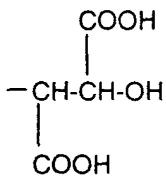

und

$n_4$ 0 oder 1 bedeuten,

(b) ein Gemisch aus Natriumgluconat und einem Magnesiumsalz,
(c) Essigsäure und
(d) ein Gemisch aus monomeren und oligomeren Verbindungen der Formel

(6) 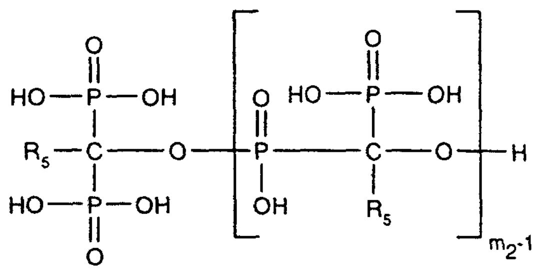

worin
$R_5$ Methyl oder Ethyl und $m_2$ 1 bis 14 bedeuten, enthält.

**16.** Zusammensetzung nach Anspruch 1, dadurch gekennzeichnet, dass sie

($a_1$) ein Polypeptid der Asparaginsäure der Formel

(1) 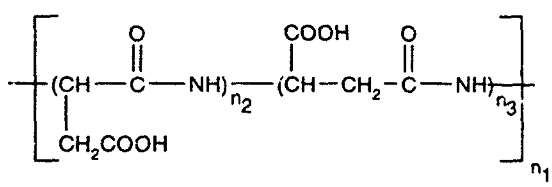 ,

worin

$n_1$ 3-15,
$0 \leq n_2 \leq 2$,
$0 \leq n_3 \leq 2$ und die Summe von $n_2$ und $n_3$ gleich 2 ist,

($a_{43}$) Zitronensäure,
(b) ein wasserlösliches Magnesiumsalz der Gluconsäure und
(c) Essigsäure

enthält.

**17.** Zusammensetzung nach einem der Ansprüche 1 bis 16, dadurch gekennzeichnet, dass sie, bezogen auf die Wirksubstanz,

1 bis 40 % der Komponente (a),

| | |
|---|---|
| 1 bis 25% | der Komponente (b), |
| 0,1 bis 5 % | der Komponente (c), und |
| ad 100 % | Wasser enthält. |

**18.** Verfahren zum Bleichen von cellulosehaltigen Fasermaterialien, dadurch gekennzeichnet, dass man das Fasermaterial mit einer wässrigen Flotte behandelt, welche mindestens eine Perverbindung, ein Alkalimetallhydroxid und eine Zusammensetzung nach einem der Ansprüche 1 bis 17 enthält.

**19.** Verbindungen der Formel

(4a)

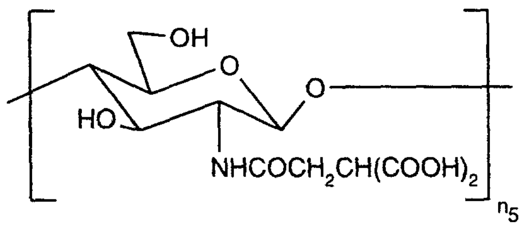

worin
$n_5$ 200 bis 13000 bedeutet.

**20.** Verbindungen der Formel

(4b)

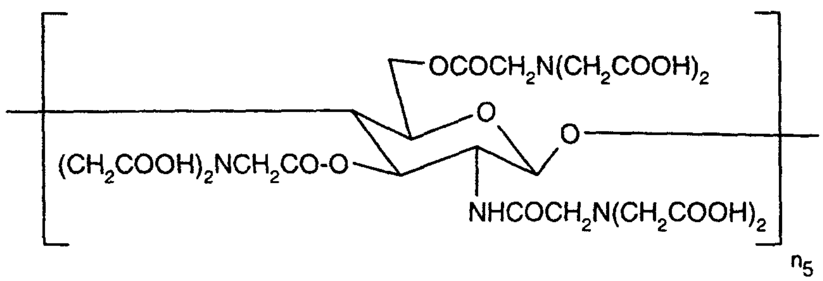

worin
$n_5$ 200 bis 13000 bedeutet.

**21.** Verfahren zur Herstellung der Verbindungen nach Anspruch 19 oder 20, dadurch gekennzeichnet, dass man Chitosan zur Verbindung der Formel (4a) bzw. (4b) nach folgendem Schema umsetzt:

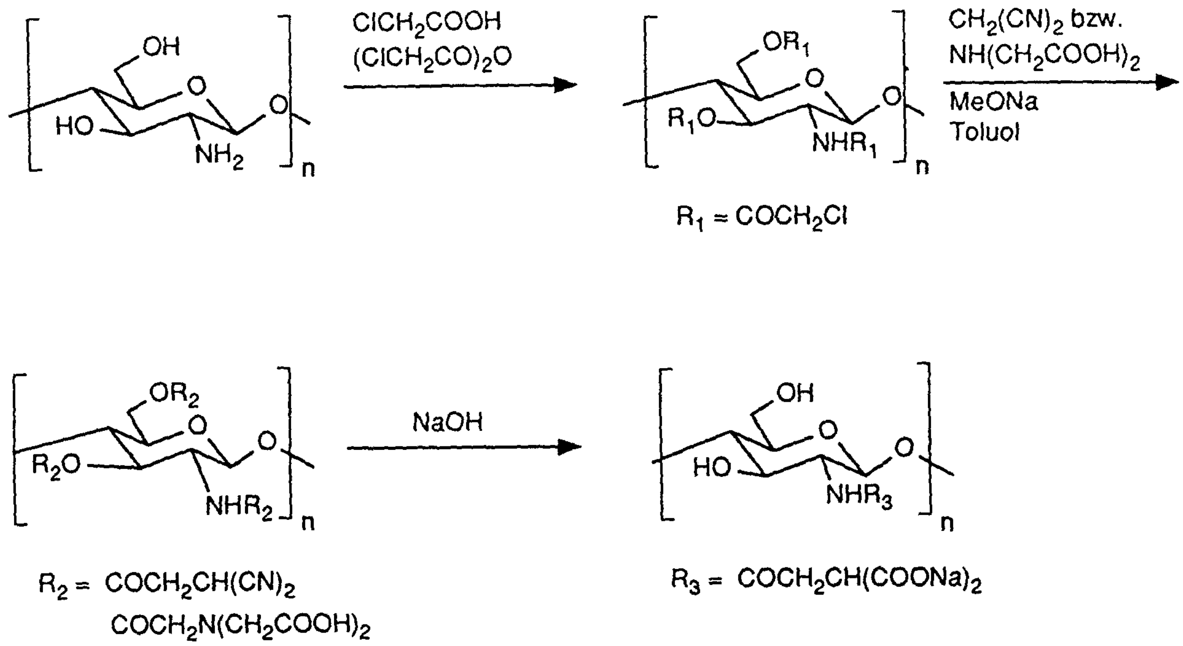


## Claims

**1.** An aqueous formulation comprising

(a) as a bleach stabilising component,

($a_1$) a polymer of an α-monoaminodicarboxylic acid,
($a_2$) a carboxymethylated α-amino acid of formula

(2) 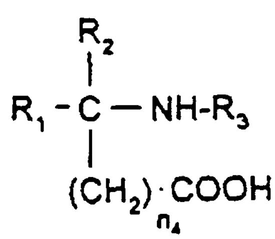 ,

in which

$R_1$ is hydrogen, $-CH_2COOH$ or $-(CH_2)_2COOH$,
$R_2$ is hydrogen or $-CH_2COOH$
$R_3$ is $-CH_2COOH$ or

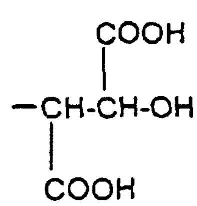

and

$n_4$ is 0 or 1; or an aspartic acid or a glutamic acid,

($a_3$) an ionogenic or anionically modified polysaccharide or
($a_4$) a sequestrant, selected from
($a_{41}$) a mixture of monomeric and oligomeric compounds corresponding to

(5) 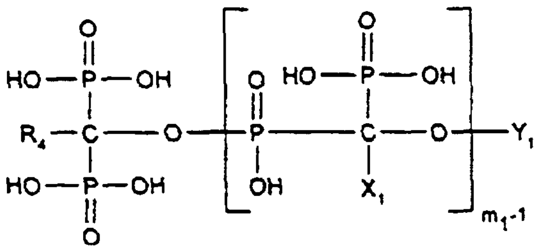 ,

in which $Y_1$ is hydrogen or $-COT_1$, $R_4$, $X_1$ and $T_1$ are each independently of one another $C_1$-$C_4$alkyl and $m_1$ is 1 to 17,
($a_{42}$) aminophosphonic acids, and
($a_{43}$) citric acid,

(b) a magnesium salt of an organic carboxylic acid, and
(c) a preservative, where one of components ($a_1$) and ($a_2$) is always present.

**2.** A formulation according to claim 1, wherein component ($a_1$) is a polymeric compound of L-aspartic acid or L-glutamic acid.

**3.** A formulation according to claim 1 or 2, wherein component ($a_1$) is a polypeptide of aspartic acid of formula

(1) 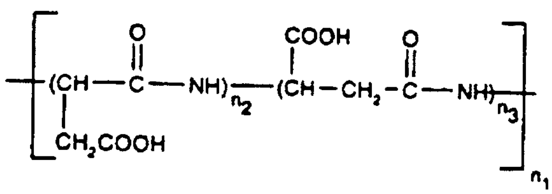

wherein

$n_1$ is 3-15,
$0 \leq n_2 \leq 2$,
$0 \leq n_3 \leq 2$ and the sum of $n_2$ and $n_3$ is 2.

**4.** A formulation according to claim 1, wherein component ($a_2$) is a carboxymethylated derivative of L-aspartic acid or L-glutamic acid.

**5.** A formulation according to claim 4, wherein component ($a_2$) is N-(1,2-dicarboxy-2-hydroxyethyl)aspartic acid of formula

(3) 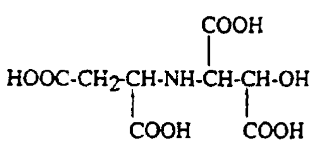 .

**6.** A formulation according to claim 1, wherein an ionogenic polysaccharide of formula

(4a)

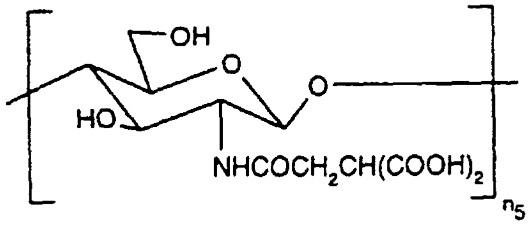

in which
$n_5$ is 200 to 13 000,
is used as component ($a_3$).

**7.** A formulation according to claim 1, wherein the ionogenic polysaccharide used is a compound of formula

(4b)

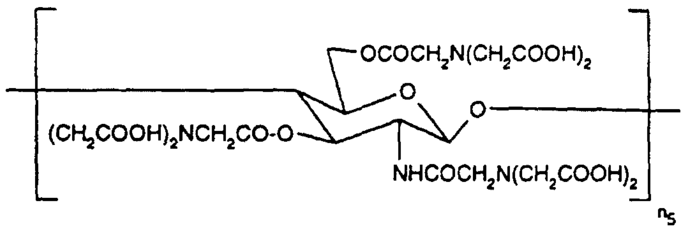

in which $n_5$ is 200 to 13 000.

**8.** A formulation according to claim 1, wherein component ($a_{41}$) is a mixture of monomeric and oligomeric compounds of formula

(6)

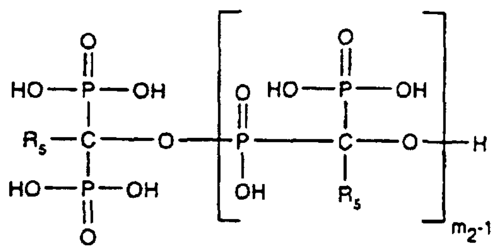

in which
$R_5$ is methyl or ethyl and $m_2$ is 1 to 14.

**9.** A formulation according to claim 1, wherein component ($a_{41}$) is a mixture of monomeric and oligomeric compounds of formula

(7)

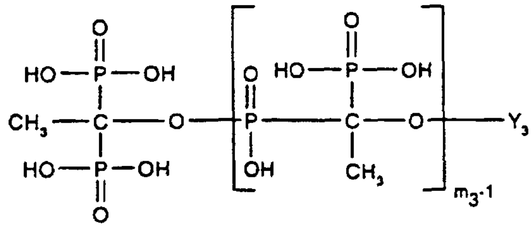

in which $Y_3$ is hydrogen or acetyl and $m_3$ is 1 to 4.

**10.** A formulation according to claim 1, wherein component ($a_{42}$) used is aminotrimethylenephosphonic acid, ethylenediaminetetramethylenephosphonic acid or diethylenetriaminepentamethylenephosphonic acid.

**11.** A formulation according to claim 1, which comprises mixtures of components ($a_{41}$) and/or mixtures of ($a_{42}$) with ($a_{43}$).

**12.** A formulation according to claim 1, wherein a water-soluble magnesium salt of gluconic acid is used as component (b) .

**13.** A formulation according to claim 12, wherein the water-soluble magnesium salt used in component (b) is magnesium sulfate or magnesium chloride.

**14.** A formulation according to claim 1, comprising as component

($a_1$) a polypeptide of aspartic acid of formula

(1) 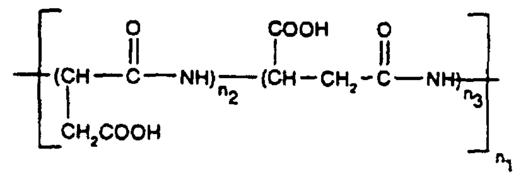

in which

$n_1$ = 3-15,
$0 \leq n_2 \leq 2$,
$0 \leq n_3 \leq 2$ and the sum of $n_2$ and $n_3$ is 2,

($a_{41}$) a mixture of monomeric and oligomeric compounds of formula

(6) 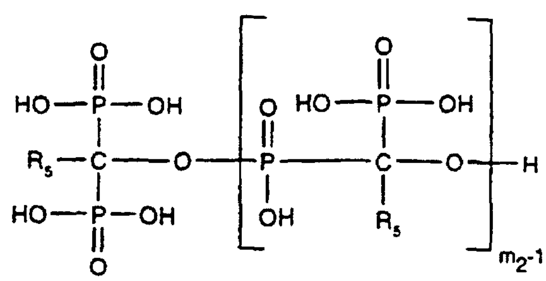

in which
$R_5$ is methyl or ethyl and $m_2$ is 1 to 14,
($b_1$) a water-soluble magnesium salt of gluconic acid, and
($c_1$) acetic acid.

**15.** A formulation according to claim 1, comprising

($a_2$) a carboxymethylated α-amino acid of formula

(2) 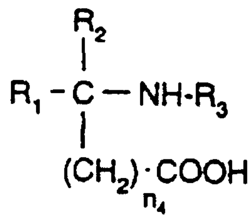

wherein

$R_1$ is hydrogen, $-CH_2COOH$ or $-(CH_2)_2COOH$,
$R_2$ is hydrogen or $-CH_2COOH$,
$R_3$ $-CH_2COOH$ or

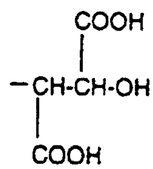

and
$n_4$ is 0 or 1,

(b) a mixture of sodium gluconate and a magnesium salt,
(c) acetic acid, and
(d) a mixture of monomeric and oligomeric compounds of formula

(6) 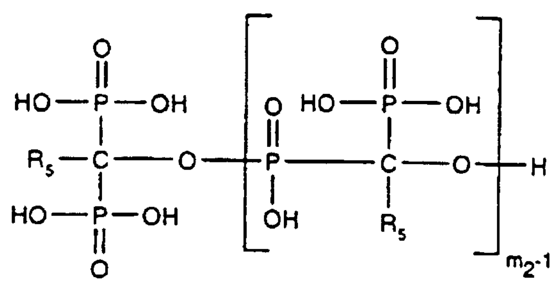

in which
$R_5$ is methyl or ethyl and $m_2$ is 1 to 14.

**16.** A formulation according to claim 1, comprising

($a_1$) a polypeptide of aspartic acid of formula

(1) 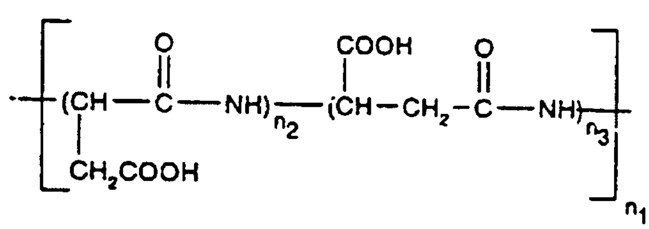

in which

$n_1$ is 3-15,
$0 \leq n_2 \leq 2$,
$0 \leq n_3 \leq 2$ and the sum of $n_2$ and $n_3$ is 2,

($a_{43}$) citric acid,
(b) a water-soluble magnesium salt of gluconic acid and
(c) acetic acid.

**17.** A formulation according to any one of claims 1 to 16, which comprises, based on the active substance,

1 to 40% of component (a),
1 to 25% of component (b),
0.1 to 5% of component (c), and

water to make up 100%.

**18.** A process for bleaching cellulosic fibre materials, which comprises treating said material with an aqueous liquor that contains at least one per compound, an alkali metal hydroxide and a formulation according to any one of claims 1 to 17.

**19.** Compounds of formula

(4a) 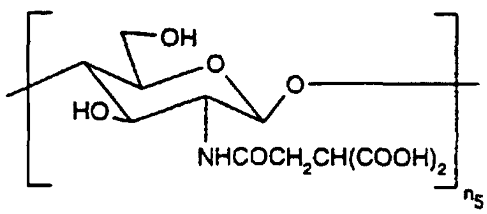

in which
$n_5$ is 200 to 13 000.

**20.** Compounds of formula

(4b) 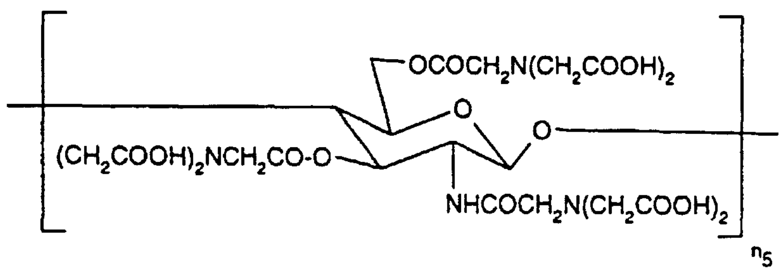

in which
$n_5$ is 200 to 13 000.

**21.** A process for the preparation of a compound as claimed in claim 19 or 20, which comprises reacting chitosan to give the compound of formula (4a) or (4b) in accordance with the following scheme:

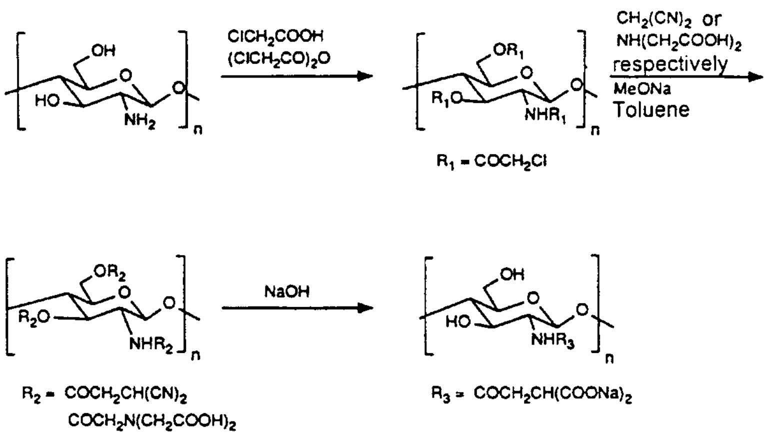


## Revendications

**1.** Composition aqueuse contenant

(a) en tant que constituant régulateur de blanchiment

($a_1$) un composé polymère d'un acide $\alpha$-monoaminodicarboxylique
($a_2$) un $\alpha$-aminoacide carboxyméthylé de formule

(2) 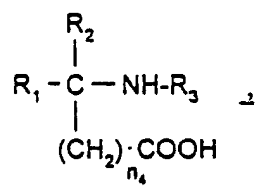

où

$R_1$ représente un atome d'hydrogène, des groupes $-CH_2COOH$ ou $-(CH_2)_2COOH$,
$R_2$ représente un atome d'hydrogène, des groupes $-CH_2COOH$,
$R_3$ représente un groupe $-CH_2COOH$ ou

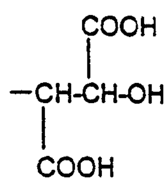

et
$n_4$ vaut 0 ou 1 ; ou un acide asparagique ou glutamique,

($a_3$) un polysaccharide ionogène ou à modification anionique ou
($a_{41}$) un mélange de composés monomères et oligomères correspondant à

(5) 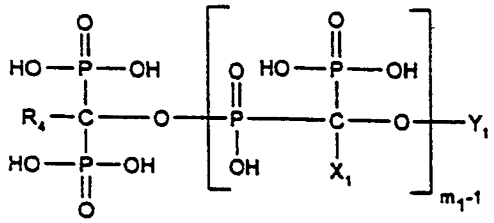 ,

où

$Y_1$, représente un atome d'hydrogène ou un groupe $-COT_1$, $R_4$, $X_1$ et $T_1$ représentent chacun, indépendamment les uns des autres, des groupes alkyle en $C_1$-$C_4$ et $m_1$ va de 1 à 17,

($a_{42}$) des acides aminophosphoniques, et

($a_{43}$) l'acide citrique,

(b) un sel de magnésium d'un acide carboxylique organique et

(c) un conservateur,

**un des constituants ($a_1$) et ($a_2$) étant toujours présent.**

**2.** Composition selon la revendication 1, caractérisée en ce que constituant ($a_1$) est un composé polymère de l'acide L-asparagique ou de l'acide L-glutamique.

**3.** Composition selon la revendication 1 ou 2, caractérisée en ce que le constituant ($a_1$) est un polypeptide de l'acide asparagique répondant à la formule

(1) 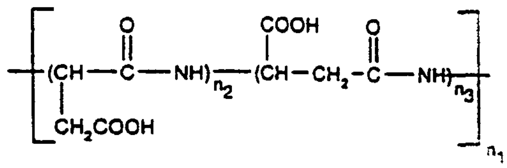

où

$n_1$ va de 3 à 15,

$0 \leq n_2 \leq 2$,

$0 \leq n_3 \leq 2$ et la' somme de $n_2$ et de $n_3$ est égale à 2.

**4.** Composition selon la revendication 1, caractérisée en ce que le constituant ($a_2$) est un dérivé carboxyméthylé de l'acide L-asparagique ou de l'acide L-glutamique.

**5.** Composition selon la revendication 4, caractérisée en ce que le constituant ($a_2$) est l'acide N-(1,2-dicarboxy-2-hydroxyéthyl)asparagique répondant à la formule

(3) 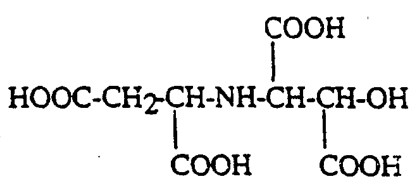

**6.** Composition selon la revendication 1, caractérisée en ce qu'on utilise en tant que constituant ($a_3$) un polysaccharide ionogène de formule

(4a)

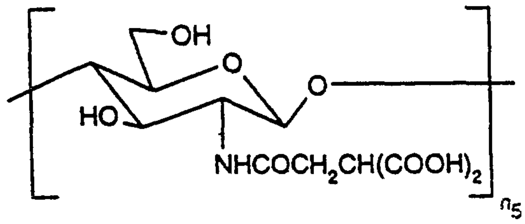

où
$n_5$ va de 200 à 13000.

**7.** Composition selon la revendication 1, caractérisée en ce qu'on utilise, en tant que polysaccharide ionogène, un composé de formule

(4b)

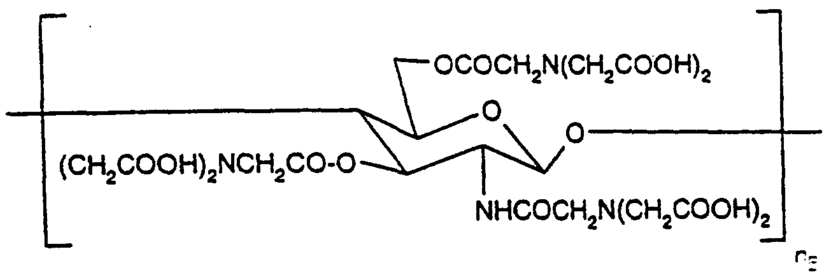

où
$n_5$ va de 200 à 13000.

**8.** Composition selon la revendication 1, caractérisée en ce que le constituant ($a_{41}$) représente un mélange de composés monomères et oligomères de formule

(6)

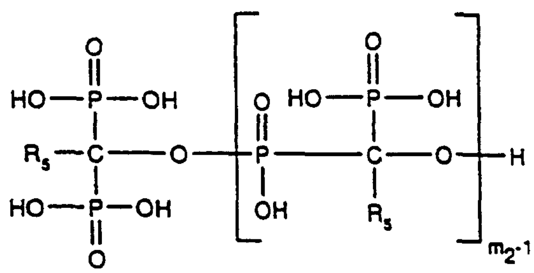

où

$R_5$ représente un groupe méthyle ou éthyle et
$m_2$ va de 1 à 14.

**9.** Composition selon la revendication 1, caractérisée en ce que le constituant ($a_{41}$) est un mélange de composés monomères et oligomères de formule

(7) 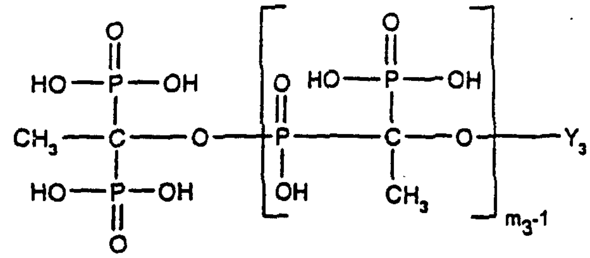

où

$Y_3$ représente un atome d'hydrogène ou un groupe acétyle et
$m_3$ va de 1 à 4.

**10.** Composition selon la revendication 1, caractérisée en ce qu'on utilise, en tant que constituant ($a_{42}$), l'acide aminotriméthylènephosphonique, l'acide éthylènediaminetétraméthylènephosphonique ou l'acide diéthylènetriaminepentaméthylènephosphonique.

**11.** Composition selon la revendication 1, caractérisée en ce qu'elle contient des mélange des constituants ($a_{41}$) et/ou mélanges de ($a_{42}$) avec ($a_{43}$).

**12.** Composition selon la revendication 1, caractérisée en ce qu'on utilise, en tant que constituant (b), un sel de magnésium hydrosoluble de l'acide gluconique.

**13.** Composition selon la revendication 12, caractérisée en ce qu'on utilise dans le constituant (b), en tant que sel de magnésium hydrosoluble, le sulfate de magnésium ou le chlorure de magnésium.

**14.** Composition selon la revendication 1, caractérisée en ce qu'on utilise, en tant que constituant

($a_1$) un polypeptide de l'acide asparagique de formule

(1) 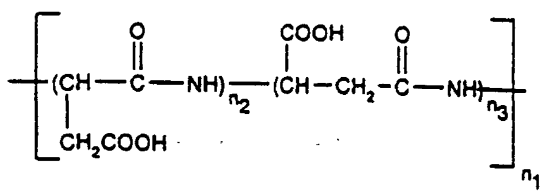 ,

où

$n_1$ va de 3 à 15,
$0 \leq n_2 \leq 2$,
$0 \leq n_3 \leq 2$ et la somme de $n_2$ et de $n_3$ est égale à 2.

($a_{41}$) un mélange de composés monomères et oligomères de formule

( 6 )

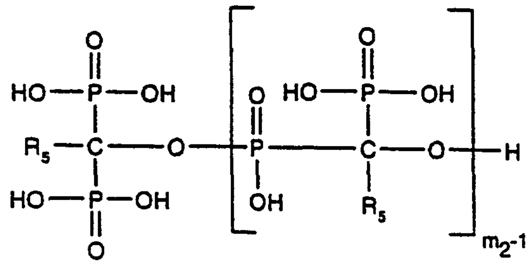

où

$R_5$ représente un groupe méthyle ou éthyle et
$m_2$ va de 1 à 14,

($b_1$) un sel de magnésium hydrosoluble de l'acide gluconique et
($c_1$) l'acide acétique.

**15.** Composition selon la revendication 1, caractérisée en ce qu'elle contient

($a_2$) une α-aminoacide carboxyméthylé de formule

( 2 )

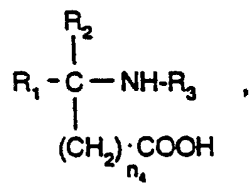

où

$R_1$ représente un atome d'hydrogène, un groupe $-CH_2COOH$ ou $-(CH_2)_2COOH$,
$R_2$ représente un atome d'hydrogène ou un groupe $-CH_2COOH$ et
$R_3$ représente un groupe $-CH_2COOH$ ou

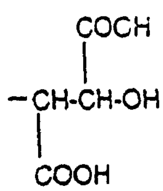

et
$n_4$ vaut 0 ou 1,

(b) un mélange de gluconate de sodium et d'un sel de magnésium,
(c) l'acide acétique et
(d) un mélange de composés monomères et oligomères de formule

(6) 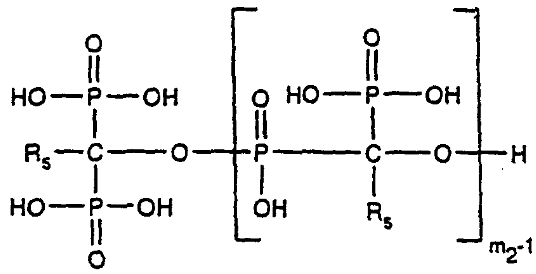

où
$R_5$ représente un groupe méhyle ou éthyle et
$m_2$ va de 1 à 14.

**16.** Composition selon la revendication 1, caractérisée en ce qu'elle contient

($a_1$) un polypeptide de l'acide asparagique de formule

(1) 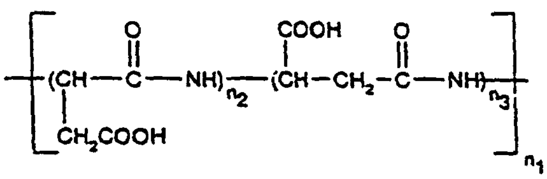 ,

où

$n_1$ va de 3 à 15,
$0 \leq n_2 \leq 2$,
$0 \leq n_3 \leq 2$. et la somme de $n_2$ et de $n_3$ est égale à 2,

($a_{43}$) l'acide citrique
(b) un sel de magnésium hydrosoluble de l'acide gluconique et
(c) l'acide acétique.

**17.** Composition selon l'une des revendications 1 à 16, caractérisée en ce qu'elle contient, par rapport à la substance active,

| | |
|---|---|
| de 1 à 40% | du constituant (a), |
| de 1 à 25% | du constituant (b), |
| de 0,1 à 5% | du constituant (c), et |

q.s.p. 100% d'eau.

**18.** Procédé pour le blanchiment de matières fibreuses contenant de la cellulose, caractérisé en ce qu'on traite la matière fibreuse par un bain aqueux qui contient au moins un per-composé, un hydroxyde d'un métal alcalin et une composition selon l'une des revendications 1 à 17.

**19.** Composés de formule

(4a)

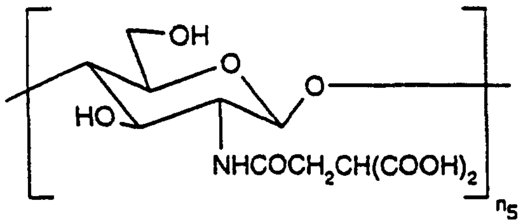

où
$n_5$ va de 200 à 13000.

**20.** Composés de formule

(4b)

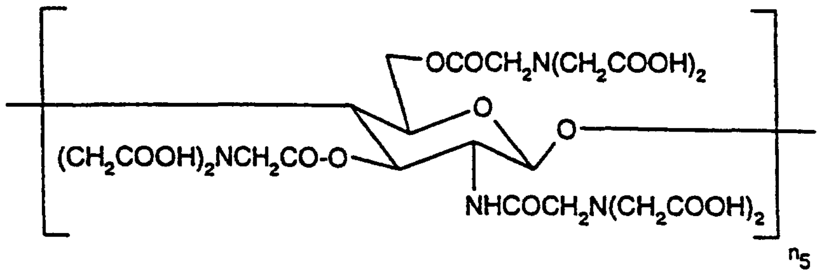

où
$n_5$ va de 200 à 13000.

**21.** Procédé pour la préparation des composés selon la revendication 19 ou 20, caractérisé en ce qu'on fait réagir le chitosane pour obtenir le composé de formule (4a) ou (4b) selon le schéma suivant :